# EUROPEAN PATENT SPECIFICATION

(11) **EP 1 627 168 B1**
(45) Date of publication and mention of the grant of the patent: **17.12.2008**
(21) Application number: 04748606.3
(22) Date of filing: 26.05.2004
(51) Int. Cl.: F16K 17/04

(54) **PRESSURE RELIEF VALVE**
ENTLASTUNGSVENTIL
SOUPAPE DE SURETE

(30) Priority: 27.05.2003 NL 1023546
(43) Date of publication of application: 22.02.2006
(73) Proprietor: FLAMCO B.V., NL-2802 AC Gouda (NL)
(72) Inventor: KEMPER, Dimitri, Wasil, NL-1019 HX Amsterdam (NL); POSTMA, Jan, NL-3344 AL Hendrik Ido Ambacht (NL); CNOSSEN, Jan, Henk, NL-8723 CP Koudum (NL); ZAANEN, Abraham, NL-2941 AP Lekkerkerk (NL)
(74) Representative: Iemenschot, Johannes Andreas
(86) International application number: PCT/NL2004/000374
(87) International publication number: WO 2004/106789

(56) References cited:
- FR-A- 2 146 056
- FR-A- 2 432 663
- GB-A- 190 911 193

## Description

The invention relates to a pressure relief valve, comprising a valve housing with a valve seat, which surrounds a passage, a valve body, which can move between an open position and a closed position and is designed to interact in a sealing manner, in the closed position, with the valve seat so as to close off the passage, a torsion spring which acts with a prestressing force on the valve body in order to press the valve body towards the valve seat with a defined force, and adjustment means for adjusting the prestressing force of the torsion spring.

A pressure relief valve of this type is known, inter alia, from GB 948 235. In the pressure relief valve disclosed by this document, the valve body is rotatably secured to the valve housing via a pivot connection. The torsion spring is arranged at the location of the axis of rotation of the valve body and is active between the valve housing and the valve body. The prestressing force of the torsion spring is adjusted by displacement of the point of engagement of the torsion spring on the valve body in the direction in which the prestressing force of the torsion spring acts.

FR-2.432.663 discloses a one-way valve, comprising a valve housing with a valve seat which surrounds a passage, and a valve body. The valve body is able to move between an open and a closed position. The valve further comprises two torsion springs, which are connected to a pin. The pin is held in the valve housing in a rotatable manner, and can be fixed with regard to the housing by means of adjusting means. The valve body is held by the pin, such that is capable of rotating from the open to the closed position. The torsion springs act on the valve body in order to keep it in the closed position. The adjusting means allow the pin to be fixed in different angular positions related to the valve housing. As the torsion spring is fixedly connected to the pin, this arrangement allows to adjust the pre-stressing force on the valve body of the torsion spring.

The known pressure relief valve has the drawback that the number of components of the valve is relatively large and the construction and assembly of the valve are relatively complicated.

It is an object of the invention to provide a pressure relief valve of the abovementioned type which is of simple construction and is easy to install.

This object is achieved, according to the invention, by a pressure relief valve in accordance with claim 1.

Preferred embodiments of the pressure relief valve according to the invention are defined in the dependent claims.

The invention will be explained in the following description of a number of embodiments and with reference to the drawing, in which:
Fig. 1 shows a perspective exploded view, partially in cross section, of a first embodiment of the pressure relief valve according to the invention;
Fig. 2 shows a cross-sectional view through the pressure relief valve from Fig. 1 in a closed position, with the eccentric pin in a first position;
Fig. 3 shows a view corresponding to that shown in Fig. 2, with the eccentric pin a second position;
Fig. 4a, b show a second embodiment of the relief valve according to the invention in the closed position, in cross section (Fig. 4a) and as seen in the direction of arrow IV (Fig. 4b); and
Fig. 5a, b show the pressure relief valve from Fig. 4a, b, in cross section (Fig. 5a) and as seen in the direction of arrow V (Fig. 5b), with the valve body having been lifted off the valve seat.

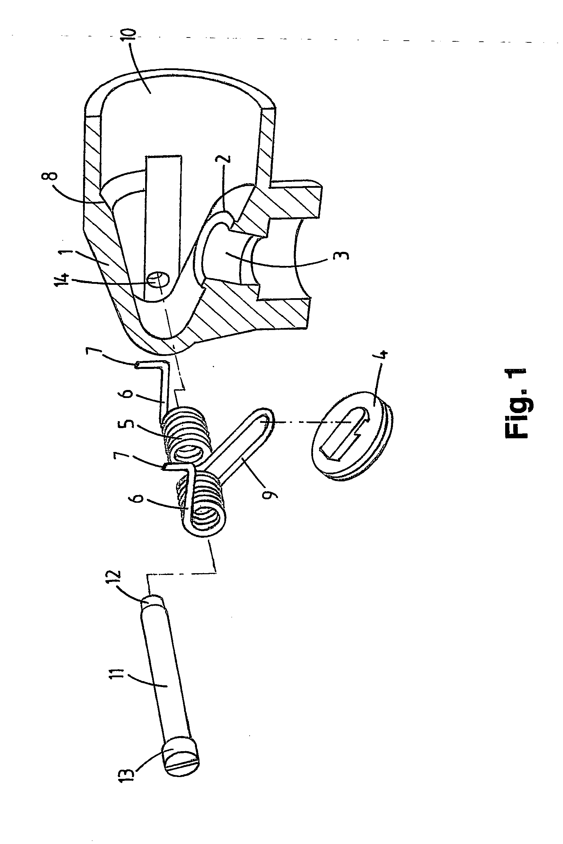

The embodiment of the pressure relief valve according to the invention which is illustrated in Fig. 1-3 comprises a valve housing 1 with a valve seat 2 which surrounds a passage 3, as well as a valve body 4, which can move between an open position and a closed position and is designed to interact in a sealing manner, in the closed position, with the valve seat 3 so as to close off the passage 3.

The pressure relief valve also comprises a torsion spring 5, which acts with a prestressing force on the valve body 4 in order to press the valve body 4 towards the valve seat 2 with a defined force. The valve is provided with adjustment means, which are to be described in more detail below, for adjusting the prestressing force of the torsion spring 5.

In the embodiment shown in Fig. 1-3, the torsion spring 5 is designed as a coil torsion spring 5 which is provided at each of its two ends with a first arm 6 extending transversely with respect to the coil torsion spring 5. The free end 7 of each arm 6 is supported against an obliquely running part 8 of the valve housing 1. In the centre, the coil torsion spring 5 is provided with a second arm 9, which extends transversely with respect to the coil torsion spring 5 and to which the valve body 4 is connected.

The valve body 4 is connected only to the second arm 9, and its movement between the closed position and open position is guided exclusively by the coil torsion spring 5.

In the above-described embodiment, the coil torsion spring 5 and the valve body 4 connected to it form a unit which is of simple construction and can easily be installed in the valve housing 1, for example via an opening 10.

The coil torsion spring 5 is positioned in the valve housing 1 by means of a pin 11 which extends through the coil torsion spring 5 and the ends 12 and 13 of which are mounted in the valve housing 1. Fig. 1 shows the bearing opening 14 for the end 12. The end 13 and the associated bearing opening (not shown) in the valve housing 1 have a larger diameter than the remainder of the pin 11, so that the pin 11 can be fitted through the coil torsion spring from outside the valve housing 1.

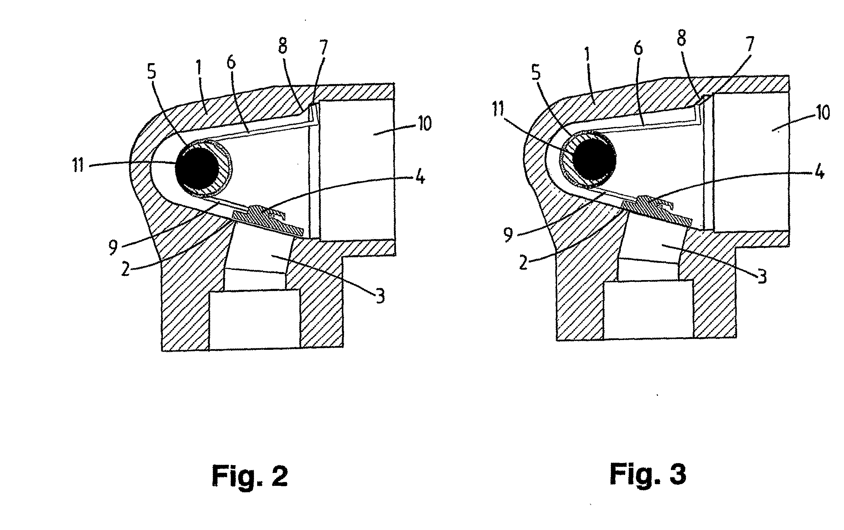

The pin 11 is designed as a rotatable eccentric pin. As can be seen from Figs. 2 and 3, it is possible to adjust the position of the coil torsion spring 5 in the valve housing 1 by rotation of the eccentric pin 11. On account of the fact that the free end 7 of each of the two first arms 6 of the coil torsion spring 5 is supported against an obliquely running part 8 of the valve housing 1, in the event of the eccentric pin 11 being rotated the free end 7 of each of the two first arms 6 will move over the obliquely running part 8, and the distance from the free ends 7 to the valve body, and therefore the prestressing force acting on the valve body, will change. Consequently, the prestressing force of the coil torsion spring 11 can be altered in a simple way through rotation of the eccentric pin 11.

Fig. 2 illustrates the situation in which the distance from the free end 7 of the first arm 6 to the valve body 4 is at a maximum and the prestressing force of the coil torsion spring 5 is at a minimum. Fig. 3 shows the situation in which the distance from the free end 7 of the first arm 6 to the valve body 4 is at a minimum and the prestressing force of the coil torsion spring 5 is at a maximum.

In the event of the eccentric pin 11 being rotated, the valve body 3, which is connected to the second arm 9 of the coil torsion spring 5, will be displaced slightly over the valve seat 2.

The position in the direction of rotation of the coil torsion spring 11, can be fixed, for example by the eccentric pin 11 being provided, at the location of the end 13, with a section with a knurled edge (not shown) and by the eccentric pin 11 being displaced in the axial direction after it has been adjusted in its direction of rotation and by that section of the eccentric pin 11 which is provided with a knurled edge being pressed into the associated bearing opening (not shown) in the valve housing 1, so that the eccentric pin 11 is locked against rotation.

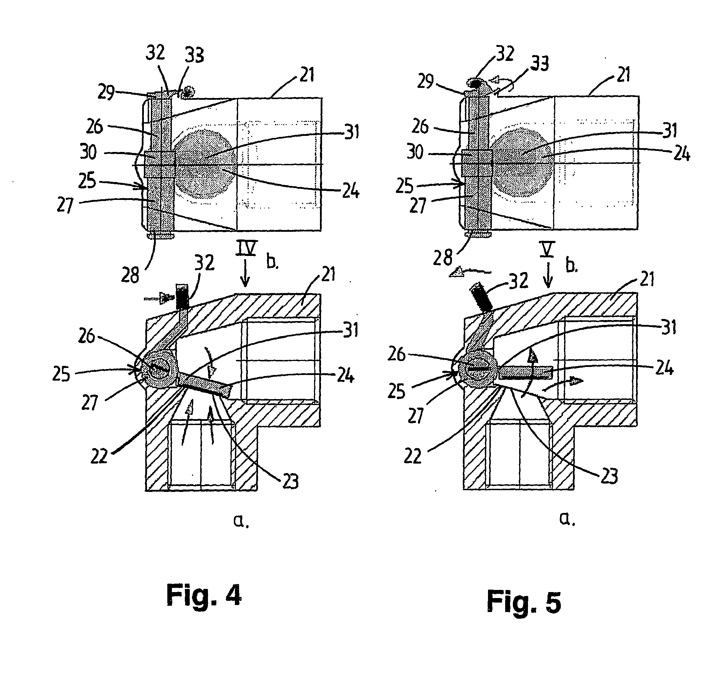

Figs. 4 and 5 show another embodiment of the pressure relief valve according to the invention.

This embodiment likewise comprises a valve housing 21 with a valve seat 22 which surrounds a passage 23, and a valve body 24 which can move between an open position and a closed position and is designed to interact in a sealing manner, in the closed position, with the valve seat 22 so as to close off the passage 23.

The pressure relief valve also comprises a torsion spring 25 which acts with a prestressing force on the valve body 24 in order to press the valve body 24 towards the valve seat 22 with a defined force.

In this embodiment, the torsion spring 25 is designed as a pin 26 mounted in the valve housing 21 and a sleeve 27 around the pin 26, with the pin 26 and sleeve 27 being fixedly connected to one another at one end 28. The other end 29 of the pin 26 can be rotated and fixed with respect to the valve housing 21. The other end 30 of the sleeve 27 is located substantially in the centre of the pin 26 and is provided with an arm 31 which extends transversely with respect to the torsion spring 25 and to which the valve body 24 is connected. The torsion spring 25 is therefore designed as a type of torsion bar spring.

In the embodiment shown in Figs. 4 and 5, once again the valve body 24 is connected only to the arm 31, and the movement of the valve body 24 between the closed position and open position is guided exclusively by the torsion spring 25.

The prestressing force of the torsion spring 25 can easily be adjusted by rotating the end 29 of the pin 26. After the adjustment has taken place, the end 29 can be fixed with respect to the valve housing 21.

The end 29 of the pin 26 is provided with a handle 32 which is connected fixedly to it and can be actuated from outside the valve housing 21. The handle 32 can be fixed in a plurality of positions with respect to the valve housing 21, depending on the spring force which the torsion spring 25 is required to supply.

Figs. 4 and 5 show the handle 32 in two positions. Fig. 4 shows the position in which the handle 32 hooks behind a projection 33 on the valve housing 21, stressing the torsion spring 25, with the result that the valve body 24 is pressed onto the valve seat 22. Fig. 5 shows the position in which the torsion spring 25 is stress-free and the valve body 24 is lifted off the valve seat 22. Actuation of the handle 32 makes it possible to control the lifting of the valve body.

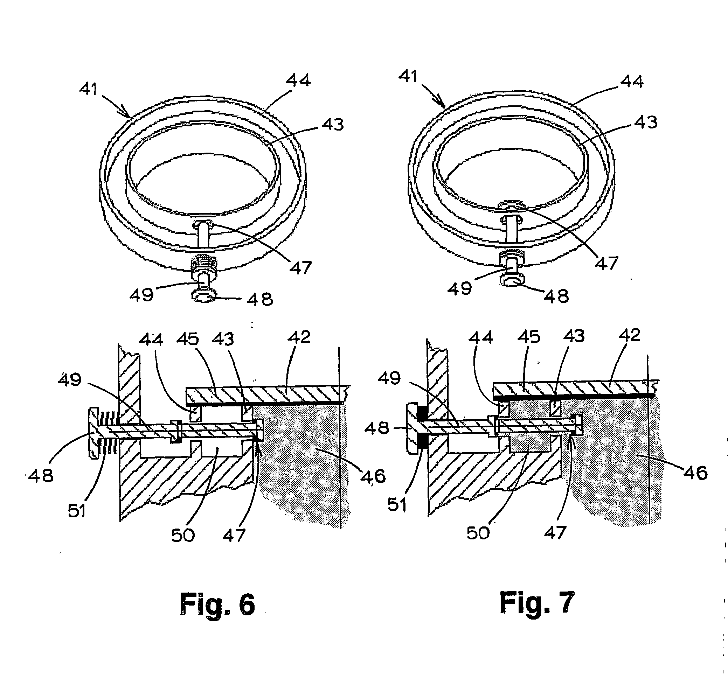

The lifting of the valve body off the valve seat can also be controlled in other ways, for example by the valve body lifting automatically under the pressure of the medium. This is illustrated in Figs. 6 and 7.

Figs. 6 and 7 show part of a valve with a valve seat 41 and a valve body 42 interacting therewith. The valve seat 41 comprises an innermost, annular seat part 43 and an outermost annular seat part 44 arranged concentrically around it. Exposing an outermost annular section 45 of the valve body 42, which is pressed onto the valve seat 42 by spring force, to the pressure of a medium 46 located beneath the valve seat allows the valve body 42 to be lifted off the valve seat 41. This can be realized by opening a small valve 47 in the innermost seat part 43 of the valve seat 41 by pressing onto the end part 48 of the valve stem 49 of the valve 47. As a result, the medium 46 flows into the space 50 between the two seat parts 43 and 44 of the valve seat 41. The spring force of the spring element (not shown) acting on the valve body 42 will then be insufficient to hold the valve body 42 on the valve seat 41, and the valve body 42 will be lifted off the valve seat 41.

After the end part 48 of the valve stem 49 has been released, the action of a compression spring 51 acting on the end part 48 will close the valve 47 again. The medium in the space 48 can leak away, with the result that only that section of the valve body 42 which is located inside the innermost section 43 of the valve seat 41 remains in contact with the pressurized medium 46. When the pressure in the space 50 is low enough, the valve body 42 once again comes to rest on the valve seat 41.

The pressure relief valve according to the invention has the following advantages:
- the valve has relatively few components,
- the design and assembly of the valve are simple,
- the pressure at which the valve will open can be adjusted accurately after assembly so as to compensate for manufacturing and assembly tolerances.

## Claims

1. Pressure relief valve, comprising a valve housing (1; 21) with a valve seat (2; 22), which surrounds a passage (3; 23), a valve body (4; 24), which can move between an open position and a closed position and is designed to interact in a sealing manner, in the closed position with the valve seat (2; 22) so as to close off the passage (3; 23), a torsion spring (5; 25) which acts with a prestressing force on the valve body (4; 24) in order to press the valve body towards the valve seat with a defined force, and adjustment means for adjusting the prestressing force of the torsion spring (5; 25) after assembly, **characterized in that** the valve body (4; 24) is connected only to the torsion spring (5; 25), and its movement is guided exclusively by the torsion spring (5; 25).

2. Pressure relief valve according to claim 1, in which the torsion spring (5) is designed as a coil torsion spring (5), which at each of its two ends is provided with a first arm (6) which extends transversely to the coil torsion spring (5) and the free end (7) of which is supported against a part (8) of the valve housing (11), and in the centre is provided with a second arm (9), which extends transversely with respect to the coil torsion spring (5) and to which the valve body (4) is connected.

3. Pressure relief valve according to claim 2, in which the coil torsion spring (5) is mounted on a pin (11) which extends through the coil torsion spring (5) and the ends (12, 13) of which are mounted in the valve housing (1).

4. Pressure relief valve according to claim 3, in which the pin (11) which extends through the coil torsion spring (5) is a rotatable eccentric pin, it being possible to adjust the position of the coil torsion spring (5) in the valve housing (1) by rotation of the eccentric pin (11).

5. Pressure relief valve according to claim 4, in which the free ends (7) of the first arms (6) of the coil torsion spring (5) are supported against an obliquely running part (8) of the valve housing (1), in such a manner than when the eccentric pin (11) is rotated, the free end (7) of each of the first arms (6) moves over the obliquely running part (8), and the distance from these free ends (7) to the valve body (4), and therefore the prestressing force of the coil torsion spring (5) acting on the valve body (4), changes.

6. Pressure relief valve according to claim 1, in which the torsion spring (25) is designed as a pin (26) and a sleeve (27) arranged around the pin (26), the pin (26) and the sleeve (27) being fixedly connected to one another at one end (28), while the other end (29) of the pin (26) can be rotated and fixed with respect to the valve housing (21) and the other end (30) of the sleeve (27) is located substantially in the centre of the pin (26) and is provided with an arm (31) which extends transversely with respect to the torsion spring (25) and to which the valve body (24) is connected.

## Patentansprüche

1. Entlastungsventil, das ein Ventilgehäuse (1; 21) mit einem Ventilsitz (2; 22), der einen Durchlass (3; 23) umgibt, einen Ventilkörper (4; 24), der sich zwischen einer offenen Position und einer geschlossenen Position bewegen kann und dazu dient, in der geschlossenen Position abdichtend mit dem Ventilsitz (2; 22) zusammenzuwirken, um den Durchlass (3; 23) zu verschließen, eine Torsionsfeder (5; 25), die mit einer Vorspannkraft auf den Ventilkörper (4; 24) einwirkt, um den Ventilkörper mit einer definierten Kraft auf den Ventilsitz zu zu pressen, und eine Einstelleinrichtung zum Einstellen der Vorspannkraft der Torsionsfeder (5; 25) nach Montage umfasst, **dadurch gekennzeichnet, dass** der Ventilkörper (4; 24) nur mit der Torsionsfeder (5; 25) verbunden ist und seine Bewegung ausschließlich durch die Torsionsfeder (5; 25) geführt wird.

2. Entlastungsventil nach Anspruch 1, wobei die Torsionsfeder (5) als eine Schrauben-Torsionsfeder (5) ausgeführt ist, die an jedem ihrer zwei Enden mit einem ersten Arm (6) versehen ist, der sich quer zu der Schrauben-Torsionsfeder (5) erstreckt, und deren freies Ende (7) an einem Teil (8) des Ventilgehäuses (11) gelagert ist, und die in der Mitte mit einem zweiten Arm (9) versehen ist, der sich in Bezug auf die Schrauben-Torsionsfeder (5) quer erstreckt und mit dem der Ventilkörper (4) verbunden ist.

3. Druckablassventil nach Anspruch 2, wobei die Schrauben-Torsionsfeder (5) an einem Zapfen (11) angebracht ist, der sich durch die Schrauben-Torsionsfeder (5) hindurch erstreckt und dessen Enden (12, 13) in dem Ventilgehäuse (1) angebracht sind.

4. Entlastungsventil nach Anspruch 3, wobei der Zapfen (11), der sich durch die Schrauben-Torsionsfeder (5) hindurch erstreckt, ein drehbarer Exzenterzapfen ist und es möglich ist, die Position der Schrauben-Torsionsfeder (5) in dem Ventilgehäuse (1) durch Drehung des Exzenterzapfens (11) einzustellen.

5. Entlastungsventil nach Anspruch 4, wobei die freien Enden (7) der ersten Arme (6) der Schrauben-Torsionsfeder (5) an einem schräg verlaufenden Teil (8) des Ventilgehäuses (1) so gelagert sind, dass, wenn der Exzenterzapfen (11) gedreht wird, sich das freie Ende (7) jedes der ersten Arme (6) über den schräg verlaufenden Teil (8) bewegt und sich der Abstand von diesen freien Enden (7) zu dem Ventilkörper (4) und damit die Vorspannkraft der Schrauben-Torsionsfeder (5), die auf den Ventilkörper (4) einwirkt, ändert.

6. Entlastungsventil nach Anspruch 1, wobei die Torsionsfeder (25) als ein Zapfen (26) und eine Buchse (27), die um den Zapfen (26) herum angeordnet ist, ausgeführt ist, wobei der Zapfen (26) und die Buchse (27) an einem Ende (28) fest miteinander verbunden sind, während das andere Ende (29) des Zapfens (26) in Bezug auf das Ventilgehäuse (21) gedreht und fixiert werden kann und sich das andere Ende (30) der Buchse (27) im Wesentlichen in der Mitte des Zapfens (26) befindet und mit einem Arm (31) versehen ist, der sich quer in Bezug auf die Torsionsfeder (25) erstreckt und mit dem der Ventilkörper (24) verbunden ist.

## Revendications

1. Soupape de sûreté, comprenant un logement de soupape (1, 21) doté d'un siège de soupape (2, 22) entourant un passage (3, 23), un corps de soupape (4, 24) pouvant se déplacer entre une position ouverte et une position fermée et conçu pour interagir de manière étanche, dans la position fermée, avec le siège de soupape (2, 22) de façon à fermer le passage (3, 23), un ressort de torsion (5, 25) agissant avec une force de précontrainte sur le corps de soupape (4, 24) afin de presser le corps de soupape vers le siège de soupape avec une force définie, et un moyen d'ajustement pour ajuster la force de précontrainte du ressort de torsion (5, 25) après le montage, **caractérisé en ce que** le corps de soupape (4, 24) est raccordé seulement au ressort de torsion (5, 25), et son mouvement est guidé exclusivement par le ressort de torsion (5, 25).

2. Soupape de sûreté selon la revendication 1,
dans laquelle le ressort de torsion (5) est conçu comme un ressort de torsion à spirale (5), doté à chacune de ses deux extrémités d'un premier bras (6) s'étendant transversalement par rapport au ressort de torsion à spirale (5) et dont l'extrémité libre (7) est supportée contre une partie (8) du logement de soupape (11), et doté en son centre d'un second bras (9), s'étendant transversalement par rapport au ressort de torsion à spirale (5) et auquel le corps de soupape (4) est raccordé.

3. Soupape de sûreté selon la revendication 2, dans laquelle le ressort de torsion à spirale (5) est monté sur un axe (11) s'étendant à travers le ressort de torsion à spirale (5) et dont les extrémités (12, 13) sont montées dans le logement de soupape (1).

4. Soupape de sûreté selon la revendication 3, dans laquelle l'axe (11) s'étendant à travers le ressort de torsion à spirale (5) est un axe excentrique rotatif, la position du ressort de torsion à spirale (5) pouvant être ajustée dans le logement de soupape (1) par la rotation de l'axe excentrique (11).

5. Soupape de sûreté selon la revendication 4, dans laquelle les extrémités libres (7) des premiers bras (6) du ressort de torsion à spirale (5) sont supportées contre une partie oblique (8) du logement de soupape (1), de telle sorte que lorsque l'axe excentrique (11) est mis en rotation, l'extrémité libre (7) de chacun des premiers bras (6) se déplace sur la partie oblique (8), et la distance depuis ces extrémités libres (7) au corps de soupape (4), et par conséquent la force de précontrainte du ressort de torsion à spirale (5) agissant sur le corps de soupape (4), change.

6. Soupape de sûreté selon la revendication 1, dans laquelle le ressort de torsion (25) est conçu comme un axe (26) et un manchon (27) disposé autour de l'axe (26), l'axe (26) et le manchon (27) étant raccordés fixement l'un à l'autre à une extrémité (28), alors que l'autre extrémité (29) de l'axe (26) peut être mise en rotation et fixée par rapport au logement de soupape (21) et l'autre extrémité (30) du manchon (27) est située sensiblement au centre de l'axe (26) et dotée d'un bras (31) s'étendant transversalement par rapport au ressort de torsion (25) et auquel le corps de soupape (24) est raccordé.
